# FASCICULE DE BREVET EUROPEEN

(11) **EP 2 167 581 B1**
(45) Date de publication et mention de la délivrance du brevet: **11.04.2018**
(21) Numéro de dépôt: 08806137.9
(22) Date de dépôt: 01.07.2008
(51) Int. Cl.: C08L 23/16, C08L 51/06, C08L 23/10

(54) **MELANGES ET COMPOSITIONS ELASTOMERES THERMOPLASTIQUES A PROPRIETES AMELIOREES, PROCEDE DE FABRICATION DES COMPOSITIONS ET APPLICATIONS**
THERMOPLASTISCHE ELASTOMERE ZUSAMMENSETZUNGEN MIT VERBESSERTEN EIGENSCHAFTEN, VERFAHREN ZUR HERSTELLUNG DIESER ZUSAMMENSETZUNGEN UND ANWENDUNGEN
ELASTOMER THERMOPLASTIC MIXTURES AND COMPOSITIONS HAVING IMPROVED PROPERTIES, METHOD OF MAKING SAID COMPOSITIONS AND APPLICATIONS THEREOF

(30) Priorité: 02.07.2007 FR 0756231
(43) Date de publication de la demande: 31.03.2010
(73) Titulaire: ARKEMA FRANCE, 92700 Colombes (FR)
(72) Inventeur: HERT, Marius, F-67680 Epfig (FR); JOUSSET, Dominique, F-27470 Serquigny (FR)
(86) Numéro de dépôt international: PCT/FR2008/051213
(87) Numéro de publication internationale: WO 2009/007634

(56) Documents cités:
- EP-A- 1 022 309
- US-A- 5 160 475
- US-B1- 6 414 081

## Description

La présente invention concerne les mélanges de polymères oléfiniques thermoplastiques et d'élastomères insaturés qui ont été formulés avec un système de réticulation ou vulcanisation et, de façon classique, avec des plastifiants, des charges et autres additifs usuels.

Elle porte aussi sur un procédé de fabrication de compositions élastomères thermoplastiques correspondantes par réticulation ou vulcanisation dynamique d'un tel élastomère formulé dans un tel polymère thermoplastique oléfinique.

Elle porte sur les compositions élastomères thermoplastiques ainsi obtenues, sur leurs utilisations pour la fabrication d'articles finis notamment par les technologies d'extrusion, d'injection-moulage et de moulage par compression, ainsi que sur les produits finis ainsi obtenus.

Les élastomères thermoplastiques à propriétés caoutchoutiques les plus connus sont issus d'un procédé de vulcanisation dynamique d'un élastomère formulé - tel qu'un élastomère éthylène-propylène-diène (EPDM) formulé - dans une matrice en général de type polyoléfine - polypropylène (PP) en particulier ou aussi polyéthylène (PE).

Dans un tel procédé, on mélange le thermoplastique tel que le PP ou le PE avec un élastomère, tel que l'EPDM, formulé avec un système de vulcanisation et on réticule cet élastomère pendant la phase de mélangeage.

Les produits obtenus sont appelés « thermoplastiques vulcanisés » (TPV) et sont constitués d'une matrice thermoplastique qui enrobe des particules de caoutchouc de quelques microns de taille et la phase caoutchouc peut être majoritaire (jusqu'à 85% en poids). Ils peuvent être mis en oeuvre comme des thermoplastiques par extrusion ou injection tout en ayant les propriétés de la phase caoutchoutique, à savoir une faible déformation rémanente à la compression ou à la traction.

Cependant, ces alliages possèdent les limites thermodynamiques inhérentes aux polymères thermoplastiques utilisés en matrice et pour les thermoplastiques vulcanisés (TPV) à matrice PP et élastomère EPDM, la température limite d'usage imposée par le PP est de 130°C. Par ailleurs, le module de flexion et la dureté élevée du PP conduisent à des alliages dont la dureté est plutôt élevée.

La demande internationale PCT WO 02/28959 A1 décrit des copolymères greffés à blocs polyamide et leurs mélanges avec des polyoléfines souples de module élastique en flexion inférieur à 150 MPa. Ces mélanges souples de faible module n'ont pas d'élasticité caoutchoutique à 70°C et plus car la polyoléfine du mélange est semi-cristalline avec un point de fusion entre 60°C et 100°C.

On a découvert que ces copolymères à blocs polyamide s'organisent en structures à l'échelle nanométrique, ce qui leur confère des propriétés de résistance thermo-mécanique exceptionnelles. Cette tenue thermo-mécanique se traduit par un module élastique pratiquement constant dans une plage de température allant de 100°C à 180°C.

Les polyoléfines greffées à blocs polyamide, qui sont issues notamment de la technologie de greffage de polyamides monoamines sur l'anhydride maléique d'un terpolymère de type éthylène/acrylate de butyle/anhydride maléique, sont des thermoplastiques souples à haute résistance thermomécanique. Ils présentent un module élastique en flexion relativement élevé, étant notamment inférieur à 200 MPa et supérieur à 50 MPa et un module élastique dynamique mesuré à 150°C. compris entre 0,5 MPa et 10MPa. Ce module est relativement constant dans une large plage de température allant de 80 à 180°C, autrement dit comprise entre le point de fusion du terpolymère éthylène/acrylate de butyle/anhydride maléique (80 - 100°C) et celui du polyamide (180 - 220°C) dans l'exemple cité.

Ces copolymères à blocs polyamide ne sont cependant pas des élastomères car ils présentent une faible élasticité rémanente à la compression au-delà de 80°C. On peut dire qu'ils ne possèdent pas d'élasticité caoutchoutique exprimée en pourcentage de déformation rémanente à la compression (DRC). Un élastomère thermoplastique a une DRC typiquement inférieure à 50%, voire 30%, alors que les polyoléfines greffées à blocs polyamide ont une DRC typiquement entre 60 et 80%.

Le brevet US 4 130 535 décrit des alliages à base de 25 à 75% de polymères thermoplastiques et de 75 à 25% de caoutchoucs oléfiniques formulés avec des plastifiants et totalement réticulés. Le polymère thermoplastique est du polypropylène.

Le brevet EP 384 822 décrit des compositions à base de copolymères de l'éthylène et d'alpha-oléfines et de caoutchoucs à base de polynorbornène plastifié et réticulé à dureté Shore A ne dépassant pas 65 grâce à l'aptitude à la plastification du polynorbornène et au choix du polymère thermoplastique parmi les copolymères de l'éthylène ne dépassant pas 130°C en point de fusion. Ces alliages ont des déformations rémanentes à la compression, mesurées à 70°C, inférieures à 45%.

La demande de brevet européen EP 1672027 décrit une composition polymère thermoplastique obtenue par mélange d'un caoutchouc dans lequel une fraction de gel de 30% en poids ou plus est dispersé uniformément dans un polymère à base de polyamide et/ou à base de polyester et par réticulation dynamique du caoutchouc. De tels polymères thermoplastiques sur base polyamide ou polyester ont les inconvénients de ne pas présenter une bonne tenue à l'hydrolyse et aux sels et de ne pas présenter de basses duretés Shore A.

Le brevet américain 5843577 décrit des élastomères thermoplastiques ayant des propriétés de surface améliorées, obtenus par l'incorporation d'un copolymère d'une polyoléfine fonctionnalisée et d'un polyamide dans ledit élastomère thermoplastique.

Le brevet US-A-5 160 475 décrit une composition comprenant un copolymère d'éthylène et d'acétate de vinyle saponifié, un copolymère élastomérique d'éthylène et de propylène et un copolymère constitué d'un tronc en polyoléfine et greffé avec des blocs polyamide attachés au tronc par un monomère tel que l'anhydride maléique.

Le brevet US-A-6 414 081 se réfère à un mélangecomprenant un élastomère thermoplastique non polaire, un polymère thermoplastique polaire et un polymère compatibilisant étant le produit de réaction d'une polyoléfine (polyéthylène ou polypropylène) fonctionalisée par un monomère anhydride maléique avec une polyamide.

Le brevet EP-A-1 022 309 divulgue une composition comprenant un copolymère éthylène-alcool vinylique, un polyéthylène (A) et un polymère (B) résultant de la réaction d'un copolymère d'éthylène et d'un monomère insaturé avec un copolyamide. Le polyéthylène (A) peut être un mélange d'un polyéthylène avec un EPDM. La polyoléfine greffée polyamide possède une organisation nanostructurée.

La présente invention vise à proposer un alliage de type TPV présentant des propriétés améliorées par rapport aux systèmes connus sans pour autant sacrifier les bonnes propriétés de ceux-ci. Ainsi, par rapport aux systèmes connus sur base de polypropylène, on vise notamment une meilleure tenue en température sachant que le polypropylène perd ses propriétés vers 130-140°C, la possibilité d'accéder à des duretés plus basses et la possibilité d'adhérer à d'autres matériaux, notamment le polyamide. Par rapport aux systèmes connus à base de polyamide, on vise notamment une meilleure tenue à l'hydrolyse et aux sels, tels que le chlorure de zinc et la possibilité d'accéder à des duretés plus basses.

Ces objectifs sont atteints selon l'invention grâce à l'utilisation d'une base de thermoplastique souple à haute tenue thermique, conservant ses propriétés jusque vers 170-180°C, et formant une phase continue contenant encore des groupements fonctionnels libres, tels que des groupements anhydride maléique libres, favorisant ainsi l'adhérence du TPV résultant sur des matériaux tels que le polyamide ou les métaux. Les TPV de la présente invention sont utiles pour réaliser des articles à bonnes propriétés élastiques dans une large gamme de température allant de - 40°C à 160°C.

La présente invention a donc d'abord pour objet Mélange comprenant, pour 100 parties en poids de (A) + (B):
(A) 10 à 90 parties en poids d'au moins un polymère thermoplastique oléfinique non nanostructuré ;
(B) 90 à 10 parties en poids d'une formulation d'au moins un élastomère ayant des doubles liaisons insaturées et capable de réagir avec un agent de réticulation ou de vulcanisation, ladite formulation incluant un système de réticulation ou de vulcanisation dudit ou desdits élastomères, au moins un plastifiant et les additifs usuels dans les formulations d'élastomères ;
(C) jusqu'à 100 parties en poids par rapport à (A) + (B) d'au moins un copolymère greffé à blocs polyamide, ledit copolymère étant constitué d'un tronc en polyoléfine et d'en moyenne au moins 1,3 greffons de polyamide sur ledit tronc et ayant une organisation nanostructurée, où lesdits greffons ont une masse molaire moyenne en nombre inférieure à 5000 g/mol et sont attachés au tronc par les restes d'un monomère insaturé (X) ayant une fonction capable de réagir avec un polyamide à extrémité aminé ; et les restes dudit monomère insaturé (X) étant fixés sur le tronc par greffage ou copolymérisation depuis sa double liaison,
(A) et (B) dans le mélange pouvant déjà avoir été combinés ensemble par le procédé de réticulation ou de vulcanisation en dynamique pour donner une composition thermoplastique réticulée ou vulcanisée.

La proportion du constituant (A) est notamment de 15 à 75 parties en poids pour respectivement 85 à 25 parties en poids du constituant (B).

La proportion du constituant (C) est notamment de 10 à 90 parties en poids par rapport à (A) + (B).

En particulier, le constituant (C) peut représenter au plus 50% en poids du mélange (A) + (C).

### Constituant (A)

Une polyoléfine du constituant (A) est définie comme un homopolymère ou copolymère d'alpha-oléfines ou de dioléfines, telles que, par exemple, éthylène, propylène, butène-1, isobutylène, pentène-1, hexène-1, octène-1, 3-méthyl-1-pentène, 4-méthyl-1-pentène, 5-méthyl-1-hexène, butadiène. A titre d'exemples, on peut citer :
- les homopolymères et copolymères de l'éthylène, en particulier le polyéthylène basse densité (LPDE), polyéthylène haute densité (HPDE), le polyéthylène basse densité linéaire (LLPDE), le polyéthylène très basse densité (VLDPE) et les polyéthylènes obtenus par catalyse métallocène, décrits par exemple dans la demande internationale PCT précitée; les copolymères de l'éthylène avec au moins une alpha-oléfine, par exemple une alpha-oléfine en C₃-C₈, tels que les copolymères éthylène/propylène, les élastomères éthylène-propylène (EPR) et les élastomères éthylène/propylène/diène (EPDM) ; les copolymères de l'éthylène avec au moins un produit choisi parmi les sels ou les esters d'acides carboxyliques insaturés tels que les esters de l'acide (méth)acrylique et des alcools en C₁-C₈, par exemple l'acrylate de méthyle, ou les esters vinyliques d'acides carboxyliques saturés tels que l'acétate de vinyle, la proportion de comonomère pouvant atteindre 40% en poids ;
- les homopolymères et copolymères du propylène;
- les copolymères blocs styrène / éthylène-butène / styrène (SEBS), styrène / butadiène / styrène (SBS), styrène / isoprène / styrène (SIS), styrène / éthylène-propylène / styrène (SEPS) ;
- les polymères d'oléfines, tels que de l'éthylène et du propylène, copolymérisés ou fonctionnalisés avec des monomères réactifs, en particulier mais sans limitation, avec l'anhydride maléique.

Une polyoléfine du constituant (A) peut ainsi être choisie parmi les homopolymères de l'éthylène, les homopolymères du propylène, les copolymères de l'éthylène avec les alpha-oléfines en C₃-C₈, avec les esters de l'acide (méth)acrylique et d'alcools en C₁-C₈ et avec l'acétate de vinyle.

### Constituant (B)

Le constituant (B) est constitué de 100 parties en poids d'un élastomère réticulable et d'un certain nombre d'additifs dont la teneur est exprimée en parties pour cent parties d'élastomère (pcr). Ces additifs sont incorporés dans l'élastomère à une température suffisamment basse pour ne par réticuler l'élastomère, typiquement inférieures à 100°C, sur des mélangeurs bien connus dans l'industrie du caoutchouc comme les mélangeurs Banbury et les mélangeurs à cylindre .

L'élastomère insaturé est notamment choisi parmi:
- les terpolymères de l'éthylène, du propylène et d'un diène (EPDM) ;
- les élastomères à base de butadiène, naturel (NR) ou synthétique et les copolymères styrène-butadiène(SBR) ;
- les copolymères du butadiène avec de l'acrylonitrile (NBR) ;
- les copolymères du butadiène avec de l'acrylonitrile partiellement hydrogénés (HNBR) ;
- les élastomères à base d'isoprène (IR) ;
- les élastomères acryliques comme les copolymères d'esters acryliques ayant une fraction réactive acide ou époxy, tels que les copolymères de l'acrylate de méthyle ou de butyle avec l'acide acrylique ou le méthacrylate de glycidyle (ACR).

Le système de réticulation ou de vulcanisation est adapté au type d'élastomère utilisé. Il est notamment choisi parmi les agents de vulcanisation à base de soufre, de peroxyde, de résine phénolique, de composés azo, maléimido, quinoïde et uréthane pour les élastomères diéniques ; parmi les agents à base d'amines multifonctionnelles, comme le carbamate d'hexaméthylènediamine ou de diisocyanates pour les élastomères acryliques ayant des groupes acide ; ou parmi les agents à base de sels d'ammonium, tels que le 2-méthylimidazole ou les molécules acides multifonctionnelles, pour les élastomères acryliques à groupement époxyde.

Les proportions du système de réticulation ou de vulcanisation sont les proportions usuelles connues de l'homme du métier pour obtenir la réticulation ou vulcanisation quasi-complète de la phase élastomère.

Le système de réticulation ou de vulcanisation représente en particulier de 1 à 20 pcr du constituant (B).

Le ou les plastifiants représentent typiquement de 5à 200 pcr du constituant (B) et sont choisis notamment parmi les huiles constituées de mélanges d'hydrocarbures aliphatiques, naphténiques ou aromatiques pour les élastomères à doubles liaisons insaturées, les huiles polaires à bases d'esters d'acide phtalique pour les élastomères acryliques.

Les additifs usuels sont généralement choisis parmi les charges minérales pulvérulentes, telles que les oxydes de zinc, de titane, les noirs de carbone, les kaolins et les silices, les pigments, les agents de couplage, les antidégradants, les additifs de mise en oeuvre comme les stéarates, les cires, et représentent notamment 10 à 150 pcr du constituant (B).

### Constituant (C)

Le constituant (C) consiste en au moins un copolymère greffé à blocs polyamide qui est tel que décrit dans la demande internationale PCT WO 02/28959 et qui peut être obtenu par réaction d'un polyamide à extrémité amine avec les restes d'un monomère insaturé X fixé par greffage ou copolymérisation sur un tronc en polyoléfine. Un tel copolymère greffé est un thermoplastique souple à haute résistance thermomécanique.

Le monomère X peut être par exemple un époxyde insaturé ou un anhydride d'acide carboxylique insaturé.

Des exemples d'époxydes insaturés sont par exemple :
- les esters et éthers de glycidyle aliphatiques tels que l'allyl glycidyl éther, le vinyl glycidyl éther, le maléate de glycidyle et l'itaconate de glycidyle, l'acrylate de glycidyle et le méthacrylate de glycidyle ; et
- les esters et éthers de glycidyle alicycliques, tels que le 2-cyclohexène 1-glycidyléther, le cyclohexène-4,5-diglycidyl carboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Des exemples d'anhydrides d'acides carboxyliques insaturés sont notamment les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique et méthyl-bicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé, tel que, par exemple l'acide (méth)acrylique.

S'agissant du tronc en polyoléfine, on définit une polyoléfine comme un homopolymère ou copolymère d'alpha-oléfines ou de dioléfines, telles que, par exemple, éthylène, propylène, butène-1, octène-1, butadiène. A titre d'exemples, on peut citer :
- les homopolymères et copolymères de l'éthylène, en particulier le polyéthylène basse densité (LPDE), polyéthylène haute densité (HPDE), le polyéthylène basse densité linéaire (LLPDE), le polyéthylène très basse densité (VLDPE) et les polyéthylènes obtenus par catalyse métallocène, décrits par exemple dans la demande internationale PCT précitée; les copolymères de l'éthylène avec au moins une alpha-oléfine, par exemple une alpha-oléfine en C₃-C₈, tels que les copolymères éthylène/propylène, les élastomères éthylène-propylène (EPR) et les élastomères éthylène/propylène/diène (EPDM) ; les copolymères de l'éthylène avec au moins un produit choisi parmi les sels ou les esters d'acides carboxyliques insaturés tels que les esters de l'acide (méth)acrylique et des alcools en C₁-C₈, par exemple l'acrylate de méthyle, ou les esters vinyliques d'acides carboxyliques saturés tels que l'acétate de vinyle, la proportion de comonomère pouvant atteindre 40% en poids ;
- les homopolymères et copolymères du propylène;
- les copolymères blocs styrène / éthylène-butène / styrène (SEBS), styrène / butadiène / styrène (SBS), styrène / isoprène / styrène (SIS), styrène / éthylène-propylène / styrène (SEPS).

La polyoléfine du tronc du polymère greffé du constituant (C) peut ainsi être choisie parmi les homopolymères de l'éthylène, les homopolymères du propylène, les copolymères de l'éthylène avec les alpha-oléfines en C₃-C₈, avec les esters de l'acide (méth)acrylique et d'alcools en C₁-C₈ et avec l'acétate de vinyle.

Avantageusement, les troncs en polyoléfine sur lesquels sont attachés les restes de X sont des polyéthylènes greffés par X ou des copolymères de l'éthylène et de X que l'on obtient par exemple par polymérisation radicalaire.

S'agissant des polyéthylènes sur lesquels on vient greffer X, on entend par polyéthylène des homo- ou copolymères.

A titre de comonomères entrant dans la constitution de ces copolymères, on peut citer :
- les alpha-oléfines, avantageusement celles ayant de 3 à 30 atomes de carbone, des exemples de telles alpha-oléfines étant le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène et le 1-triacontène ; ces alpha-oléfines peuvent être utilisées seules ou en mélange de deux ou de plus de deux ;
- les esters d'acides carboxyliques insaturés, tels que, par exemple, les (méth)acrylates d'alkyle, les alkyles pouvant avoir jusqu'à 24 atomes de carbone, des exemples d'acrylate ou méthacrylate d'alkyle étant notamment le méthacrylate de méthyle, l'acrylate d'éthyle, l'acrylate de n-butyle, l'acrylate d'isobutyle, l'acrylate de 2-éthylhexyle ;
- les esters vinyliques d'acides carboxyliques saturés tels que, par exemple, l'acétate ou le propionate de vinyle ;
- les diènes tels que, par exemple, le 1,4-hexadiène.

Le polyéthylène peut comprendre plusieurs des comonomères précédents.

Avantageusement, le polymère, qui peut être un mélange de plusieurs polymères, comprend au moins 50% et de préférence plus de 75% (en moles) d'éthylène ; sa masse volumique peut être comprise entre 0,86 et 0,98 g/cm³. Le MFI (indice de viscosité à 190°C, 2,16 kg) est compris avantageusement entre 5 et 100 g/10 min.

A titre d'exemples de polyéthylènes, on peut citer :
- le polyéthylène basse densité (LPDE) ;
- le polyéthylène haute densité (HDPE) ;
- le polyéthylène linéaire basse densité (LLPDE) ;
- le polyéthylène très basse densité (VLDPE) ;
- le polyéthylène obtenu par catalyse métallocène ;
- les élastomères EPR (ethylene - propylene - rubber) ;
- les élastomères EPDM (éthylène - propylène - diène) ;
- les mélanges de polyéthylène avec un EPR ou un EPDM ; et
- les copolymères éthylène-(méth)acrylate d'alkyle pouvant contenir jusqu'à 60% et, de préférence, 2 à 40% en poids de (méth)acrylate.

Le greffage est une opération connue en soi.

S'agissant des copolymères de l'éthylène et de X, c'est-à-dire ceux dans lesquels X n'est pas greffé, il s'agit des copolymères de l'éthylène, de X et éventuellement d'un autre monomère pouvant être choisi parmi les comonomères qui ont été cités plus haut pour les copolymères de l'éthylène destinés à être greffés.

On utilise avantageusement les copolymères éthylène-anhydride maléique et éthylène - (méth)acrylate d'alkyle - anhydride maléique. Ces copolymères comprennent avantageusement de 0,2 à 10% en poids d'anhydride maléique, de 0 à 40% et, de préférence, 5 à 40% en poids de (méth)acrylate d'alkyle. Leur MFI est compris entre 5 et 100 (190°C - 2,16 kg). Les (méth)acrylates d'alkyle ont déjà été décrits plus haut. La température de fusion est comprise entre 60 et 100°C.

Avantageusement, il y a en moyenne au moins 1,3 moles de X par chaîne attachées sur le tronc en polyoléfine, et, de préférence, de 1,3 à 10 et, mieux, de 1,3 à 7. L'homme de métier peut déterminer facilement par analyse IRTF le nombre de ces moles X.

S'agissant du polyamide à extrémité amine, on entend par polyamide les produits de condensation :
- d'un ou plusieurs aminoacides, tels que les acides aminocaproïques, amino-7-heptanoïque, amino-11-undécanoïque et amino-12-dodécanoïque ;
- d'un ou plusieurs lactames, tels que le caprolactame, l'oenantholactame et le lauryllactame ;
- d'un ou plusieurs sels ou mélanges de diamines, telles que l'hexaméthylènediamine, la dodécaméthylènediamine, la métaxylylènediamine, le bis-p-aminocyclohexylméthane et la triméthylhexaméthylène diamine avec des diacides, tels que les acides isophtalique, téréphtalique, adipique, azélaïque, subérique, sébacique et dodécanedicarboxylique;
- ou des mélanges de plusieurs monomères, ce qui conduit à des copolyamides.

On peut utiliser des mélanges de polyamides ou des copolyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6). L'avantage des copolyamides est que l'on peut ainsi choisir la température de fusion des greffons.

Avantageusement, les greffons sont des homopolymères constitués de restes de caprolactame, d'acide amino-11-undécanoïque ou de dodécalactame ou des copolyamides constitués de restes choisis parmi au moins deux des trois monomères précédents.

Le degré de polymérisation peut varier dans de larges proportions ; selon sa valeur, c'est un polyamide ou un oligomère de polyamide. Dans la suite du texte, on utilisera indifféremment les deux expressions pour les greffons.

Pour que le polyamide ait une terminaison monoamine, il suffit d'utiliser un limiteur de chaîne de formule : 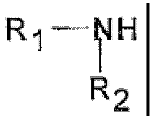 dans laquelle :
- R₁ est l'hydrogène ou un groupement alkyle linéaire ou ramifié contenant jusqu'à 22 atomes de carbone ;
- R₂ est un groupement ayant jusqu'à 22 atomes de carbone alkyle ou alcényle linéaire ou ramifié, un radical cycloaliphatique saturé ou non, un radical aromatique ou une combinaison des précédents.

Le limiteur peut être par exemple la laurylamine, la stéarylamine ou l'oléylamine. Les greffons (polyamide à extrémité amine) ont une masse molaire moyenne en poids inférieure à 5000 g/mole, avantageusement comprise entre 1000 et 5000 g/mole et de préférence entre 2000 et 4000 g/mole. Les greffons (polyamide à extrémité amine) ont une masse molaire moyenne en nombre inférieure à 5000 g/mole, préférentiellement étant par exemple comprise de 1000 à inférieur à 5000 g/mole et de préférence de 2000 à 4000 g/mole.

Les monomères amino-acides ou lactames préférés pour la synthèse de l'oligomère monoaminé selon l'invention sont choisis parmi le caprolactame, l'acide amino-11-undécanoïque ou le dodécalactame. Les limiteurs monofonctionnels de polymérisation préférés sont la laurylamine, la stéarylamine et l'oléylamine. La polycondensation définie ci-dessus s'effectue selon les procédés habituellement connus, par exemple à une température comprise en général entre 200 et 300°C, sous vide ou sous atmosphère inerte, avec agitation du mélange réactionnel. La longueur de chaîne moyenne de l'oligomère est déterminée par le rapport molaire initial entre le monomère polycondensable ou le lactame et le limiteur monofonctionnel de polymérisation. Pour le calcul de la longueur de chaîne moyenne, on compte habituellement une molécule de limiteur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement, X porte une fonction anhydride ou acide, et l'on crée ainsi des liaisons amide ou imide.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 230 et 250°C. Le temps de séjour moyen de la matière fondue dans l'extrudeuse peut être compris entre 1 et 3 minutes. Le rendement de cette addition est évalué par extraction sélective des oligomères de polyamide libres c'est-à-dire ceux qui n'ont pas réagi pour former le copolymère greffé à blocs polyamides final.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamide de la présente invention sont caractérisés par une organisation nanostructurée. Dans ces copolymères, une organisation nano-structurée se définit par des lamelles de polyamide d'épaisseur comprise entre 10 et 50 nanomètres, ou bien encore par un module élastique mesuré par analyse thermo-mécanique à une fréquence de 1 Hz sur rhéomètre dynamique de type Rheometrics supérieur à 0,5 MPa au centre de l'intervalle compris entre les températures de fusion du tronc polyoléfine et du greffon polyamide respectivement, lorsque la température de fusion du tronc polyoléfine est inférieure d'au moins 40°C à celle du greffon polyamide.

L'épaisseur des lamelles de polyamide peut être avantageusement mesurée par l'homme du métier avec la technique connue de Microscopie Electronique à Transmission et un logiciel standard de traitement d'images.

Conformément à un mode de réalisation particulier, le copolymère greffé à blocs polyamide peut se présenter sous la forme de ses précurseurs formés du mélange tronc polyoléfinique + greffons polyamide à extrémité amine.

Dans ce cas, le copolymère greffé (C) est fabriqué *in situ* par mélange du tronc polyoléfinique et des greffons à extrémité amine, le mélange final devant donner un TPV.

La présente invention a également pour objet une composition thermoplastique réticulée ou vulcanisée, caractérisée par le fait qu'elle est formée du mélange de (A), (B) et (C) tel que défini ci-dessus, dans lequel l'élastomère du constituant (B) a été réticulé ou vulcanisé pendant le mélangeage avec les constituants (A) et (C).

La présente invention porte également sur un procédé de fabrication de la composition telle que définie ci-dessus, caractérisé par le fait que l'on malaxe la formulation du constituant (B) avec les constituants (A) et (C) à une température suffisante et pendant un laps de temps suffisant pour réticuler ou vulcaniser l'élastomère du constituant (B). Un tel procédé est appelé « procédé de réticulation ou vulcanisation en dynamique ». Le malaxage peut être effectué dans un appareillage conventionnel tel que, par exemple, un malaxeur Banbury, un malaxeur Brabender, un malaxeur Rhéocord ou une extrudeuse, à une température comprise entre 150°C et 240°C environ pendant une durée comprise entre 3 et 15 minutes environ, cette durée étant d'autant moins longue que la température est plus élevée.

La présente invention porte enfin sur un article fini dont l'un des constituants au moins est obtenu à partir de la composition telle que définie ci-dessus ou obtenue par le procédé tel que défini ci-dessus ou à partir du mélange de la composition thermoplastique réticulée ou vulcanisée de (A) + (B) avec le constituant (C) par les techniques de mise en oeuvre usuelles de matières plastiques telles que, de façon non limitative, par extrusion ou co-extrusion, extrusion-couchage, injection-moulage, moulage par compression, calandrage, dépôt sur câble, dépôt de poudres après broyage y compris selon les procédés de pulvérisation électrostatique, de trempage en lit fluidisé, de prototypage laser, de rotomoulage ou de « slush molding », ce dernier procédé étant connu par l'homme de métier et désignant un procédé de moulage par écoulement libre de poudre sur un moule chaud, notamment pour la préparation de « peaux » pour planches de bord, panneaux de portes ou consoles.

Un tel article peut donc être mono-matériau ou multi-matériaux, et peut consister par exemple en un adhésif ou un liant d'adhésivité, un revêtement, un film, une plaque ou un tuyau souple mono-couche ou multi-couches, un joint pour les industries du bâtiment et de l'automobile, un soufflet de protection pour l'industrie automobile, un article injecté mono-matière ou multi-matières.

La présente invention porte enfin sur l'utilisation d'un copolymère greffé à blocs polyamide, ledit copolymère étant constitué d'un tronc en polyoléfine et d'en moyenne au moins 1,3 greffons de polyamide sur ledit tronc et ayant une organisation nanostructurée, où lesdits greffons sont attachés au tronc par les restes d'un monomère insaturé (X) ayant une fonction capable de réagir avec un polyamide à extrémité aminé ; et les restes dudit monomère insaturé (X) étant fixés sur le tronc par greffage ou copolymérisation depuis sa double liaison,
comme agent améliorant les propriétés de surface ou les propriétés thermo-mécaniques d'une composition thermoplastique réticulée ou vulcanisée, ledit agent étant introduit directement dans le mélange soumis à la réticulation ou à la vulcanisation en dynamique ou en mélange avec ladite composition thermoplastique réticulée ou vulcanisée lors de sa mise en oeuvre.

La composition selon l'invention peut notamment mais non exclusivement être associée dans les articles cités précédemment selon l'invention à d'autres matériaux polymères tels que polyamides, polyoléfines ou encore métaux, verre.

Les articles peuvent être utilisés dans des applications variées dont des exemples sont donnés ci-après sans toutefois limiter la portée de l'invention : canalisation de transport de carburant ou de fluides de refroidissement, câbles électriques, gaines de transport de câbles, adhésifs, couches ou revêtements de protection thermique, joints pour les industries du bâtiment et de l'automobile, soufflets de protection pour l'industrie automobile.

Les exemples suivants illustrent la présente invention sans toutefois en limiter la portée. Dans ces exemples, les parties et pourcentages sont en poids sauf indication contraire.

### Exemple 1 (Comparatif) :

La référence est un élastomère thermoplastique constitué de 35% d'un polypropylène de MFI égal à 2 g/10min (à 230°C sous 2,16kg) A et de 65% d'un EPDM formulé B, réticulé avec un système à base de résine phénolique et comprenant 150pcr d'huile aliphatique.

**Composition de B**

| | |
|---|---|
| EPDM | 100pcr |
| Agent de réticulation polyphénolique de degré de polymérisation compris entre 4 et 5 | 12pcr |
| Accélérateur oxyde de zinc | 12pcr |
| Plastifiant aliphatique | 150pcr |
| Kaolin | 40pcr |
| Pigment oxyde de titane | 10pcr |

Cet élastomère thermoplastique présente une dureté Shore A de 65 et un set de compression mesuré à 80°C de 35%

Sa tenue au fluage à 180°C sur un barreau injecté soumis à une contrainte de 4,9 x 10⁴ Pa (0,5 kg/cm²) est négligeable car les éprouvettes cassent rapidement.

Son module élastique à 180°C mesuré avec un rhéomètre dynamique de type Rheometrics à une fréquence de 1Hz est inférieur à 0,1 MPa

### Exemple 2 (Comparatif) :

Nous avons réalisé sur mélangeur Brabender tournant à 80tpm pendant 8 minutes et régulé à 180°C un alliage constitué de 75 % du mélange de l'exemple 1 (35% en poids d'un polypropylène de MFI égal à 2 g/10min (à 230° sous 2,16kg) A + de 65% en poids d'un élastomère EPDM formulé B contenant un système de réticulation sur base de résine phénolique et 150 pcr d'huile aliphatique) additionné de 25% en poids d'un copolymère greffé à blocs polyamide C, non synthétisé selon le procédé décrit dans WO 02/28959 : ce copolymère greffé à blocs polyamide est constitué de 80% d'un polypropylène maléisé contenant 1 % poids d'anhydride maléique greffé et de 20% de polyamide 6 de masse moléculaire moyenne en poids de 40000g/mole.

L'addition du copolymère greffé à blocs polyamide par rapport à l'Exemple 1 peut par exemple viser à améliorer les propriétés d'adhésivité sur les polyamides.

L'élastomère thermoplastique obtenu à une dureté Shore A de 75 et un set de compression à 80°C de 40%.

Sa tenue au fluage à 180°C sur un barreau injecté soumis à une contrainte de 4,9 x 10⁴ Pa (0,5 kg/cm²) est négligeable car les éprouvettes cassent rapidement.

Son module élastique à 180°C mesuré avec un rhéomètre dynamique de type Rheometrics à une fréquence de 1Hz est inférieur à 0,1 MPa.

### Exemple 3 selon l'invention :

Nous avons réalisé sur mélangeur Brabender tournant à 80tpm pendant 8 minutes et régulé à 180°C un alliage constitué de 75 % du mélange de l'exemple 1 (35% en poids d'un polypropylène de MFI égal à 2 g/10min (à 230° sous 2,16kg) A + de 65% en poids d'un élastomère EPDM formulé B contenant un système de réticulation sur base de résine phénolique et 150 pcr d'huile aliphatique) additionné de 25% en poids d'un copolymère greffé à blocs polyamide C, synthétisé selon le procédé décrit dans WO 02/28959, et constitué de 80% d'un terpolymère éthylène/acrylate d'éthyle/anhydride maléique de teneur pondérale (80/17/3) et de 20% de greffons de polyamide 6 de masse moléculaire moyenne en poids de 3000 g/mole.

L'élastomère thermoplastique obtenu à une dureté shore A de 70 et un set de compression à 80°C de 40%.

Son fluage à 180°C sur un barreau injecté soumis à une contrainte de 4,9 x 10⁴ Pa (0,5 kg/cm²) est de 50% au bout de 15 minutes

Le module élastique de cette composition, mesuré avec un rhéomètre dynamique de type Rheometrics à une fréquence de 1Hz, est supérieur à 0,5 MPa.

On constate donc que le produit selon l'Exemple 3 avec addition d'un copolymère greffé PA synthétisé selon le procédé décrit dans WO 02/28959 comporte donc de bien meilleures performances thermomécaniques, caractérisées par le test de fluage à 180°C ou la mesure de module élastique à 180°C, que selon les Exemples 1 et 2.

Il est également constaté une moindre évolution de la dureté de la composition de référence (selon l'Exemple 1) pour la composition selon l'invention de l'Exemple 3 par rapport à celle de l'Exemple 2.

## Revendications

1. Mélange comprenant, pour 100 parties en poids de (A) + (B) :
(A) 10 à 90 parties en poids d'au moins un polymère thermoplastique oléfinique non nanostructuré ;
(B) 90 à 10 parties en poids d'une formulation d'au moins un élastomère ayant des doubles liaisons insaturées et capable de réagir avec un agent de réticulation ou de vulcanisation, ladite formulation incluant un système de réticulation ou de vulcanisation dudit ou desdits élastomères, au moins un plastifiant et les additifs usuels dans les formulations d'élastomères ;
(C) jusqu' à 100 parties en poids par rapport à (A)+(B) d'au moins un copolymère greffé à blocs polyamide, ledit copolymère étant constitué d'un tronc en polyoléfine et d'en moyenne au moins 1,3 greffons de polyamide sur ledit tronc et ayant une organisation nanostructurée, où lesdits greffons ont une masse molaire moyenne en nombre inférieure à 5000 g/mole et sont attachés au tronc par les restes d'un monomère insaturé (X) ayant une fonction capable de réagir avec un polyamide à extrémité amine ; et les restes dudit monomère insaturé (X) étant fixés sur le tronc par greffage ou copolymérisation depuis sa double liaison,
(A) et (B) dans le mélange pouvant déjà avoir été combinés ensemble par le procédé de réticulation ou de vulcanisation en dynamique pour donner une composition thermoplastique réticulée ou vulcanisée.

2. Mélange selon la revendication 1, **caractérisé par le fait que** la proportion du constituant (C) est de 10 à 90 parties en poids par rapport à (A) + (B).

3. Mélange selon l'une des revendications 1 et 2, **caractérisé par le fait que** la ou les polyoléfines oléfiniques thermoplastiques sont choisies parmi les homopolymères de l'éthylène, les homopolymères du propylène, les copolymères de l'éthylène avec les alpha-oléfines en C₃-C₈ avec les esters de l'acide (méth)acrylique et d'alcools en C₁-C₈ et avec l'acétate de vinyle.

4. Mélange selon l'une des revendications 1 à 3, **caractérisé par le fait que** l'élastomère insaturé du constituant (B) est choisi parmi :
- les terpolymères de l'éthylène, du propylène et d'un diène (EPDM) ;
- les élastomères à base de butadiène, naturel (NR) ou synthétique et les copolymères styrène-butadiène(SBR) ;
- les copolymères du butadiène avec de l'acrylonitrile (NBR) ;
- les copolymères du butadiène avec de l'acrylonitrile partiellement hydrogénés (HNBR) ;
- les élastomères à base d'isoprène (IR) ;
- les élastomères acryliques comme les copolymères d'esters acryliques ayant une fraction réactive acide ou époxy, tels que les copolymères de l'acrylate de méthyle ou de butyle avec l'acide acrylique ou le méthacrylate de glycidyle (ACR).

5. Mélange selon l'une des revendications 1 à 4, **caractérisé par le fait que** le système de réticulation ou de vulcanisation est choisi parmi les agents de vulcanisation à base de soufre, de peroxyde, de résine phénolique, de composés azo, maléimido, quinoïde et uréthane pour les élastomères diéniques ; parmi les agents à base d'aminés multifonctionnelles, comme le carbamate d'hexaméthylène-diamine ou de diisocyanates pour les élastomères acryliques ayant des groupes acide ; ou parmi les agents à base de sels d'ammonium, le 2-méthylimidazole ou les molécules d'acides multifonctionnelles, pour les élastomères acryliques à groupement époxyde.

6. Mélange selon l'une des revendications 1 à 5, **caractérisé par le fait que** le système de réticulation ou de vulcanisation représente 1 à 20 pcr du constituant (B).

7. Mélange selon l'une des revendications 1 à 6, **caractérisé par le fait que** le ou les plastifiants représentent 5 à 200 pcr du constituant (B), étant choisis notamment parmi les huiles constituées de mélanges d'hydrocarbures aliphatiques, naphténiques ou aromatiques pour les élastomères à doubles liaisons insaturées, les huiles polaires à bases d'esters d'acide phtalique pour les élastomères acryliques.

8. Mélange selon l'une des revendication 1 à 7, **caractérisé par le fait que** les additifs usuels sont choisis parmi les charges minérales pulvérulentes, telles que les oxydes de zinc, de titane, les noirs de carbone, les kaolins et les silices, les pigments, les agents de couplage, les antidégradants, les additifs de mise en oeuvre comme les stéarates, les cires, et représentent notamment 10 à 150 pcr du constituant(B).

9. Mélange selon l'une des revendications 1 à 8, **caractérisé par le fait que** X est un anhydride d'acide carboxylique insaturé.

10. Mélange selon la revendication 9, **caractérisé par le fait que** le tronc en polyoléfine contenant X est choisi parmi les copolymères éthylène-anhydride maléique et éthylène - (méth)acrylate d'alkyle-anhydride maléique.

11. Mélange selon l'une des revendications 1 à 10, **caractérisé par le fait qu'**il y a en moyenne 1,3 à 10 moles de X, en particulier 1,3 à 7 moles de X, attachées sur le tronc en polyoléfine du constituant (A).

12. Mélange selon l'une des revendications 1 à 11, **caractérisé par le fait que** le copolymère à blocs polyamide présente une organisation nanostructurée avec des lamelles de polyamide d'épaisseur comprise entre 10 et 50 nanomètres, ou avec un module élastique mesuré par analyse thermo-mécanique à une fréquence de 1 Hz sur rhéomètre dynamique de type Rheometrics supérieur à 0,5 MPa au centre de l'intervalle compris entre les températures de fusion du tronc polyoléfine et du greffon polyamide respectivement, lorsque la température de fusion du tronc polyoléfine est inférieure d'au moins 40°C à celle du greffon polyamide.

13. Composition thermoplastique réticulée ou vulcanisée, **caractérisée par le fait qu'**elle est formée du mélange tel que défini à l'une des revendications 1 à 12, dans lequel l'élastomère du constituant(B) a été réticulé ou vulcanisé pendant le mélangeage avec les constituants (A) et (C).

14. Procédé de fabrication de la composition telle que définie à la revendication 13, **caractérisé par le fait que** l'on malaxe la formulation du constituant (B) avec les constituants (A) et (C) à une température suffisante et pendant un laps de temps suffisant pour réticuler ou vulcaniser l'élastomère du constituant (B).

15. Article fini dont l'un au moins des constituants est obtenu à partir de la composition telle que définie à la revendication 13 ou obtenue par le procédé tel que défini à la revendication 14 ou à partir du mélange de la composition thermoplastique réticulée ou vulcanisée de (A) + (B) avec le constituant (C) par les techniques d'extrusion ou co-extrusion, d'extrusion-couchage, d'injection-moulage, de moulage par compression, de calandrage, de dépôt sur câble, de dépôt de poudres après broyage y compris selon les procédés de pulvérisation électrostatique, de trempage en lit fluidisé, de prototypage laser, de rotomoulage ou de « slush molding», notamment pour la préparation de « peaux » pour planches de bord, panneaux de portes ou consoles.

## Patentansprüche

1. Mischung, umfassend pro 100 Gewichtsteile (A) + (B) :
(A) 10 bis 90 Gewichtsteile mindestens eines nicht nanostrukturierten olefinischen thermoplastischen Polymers;
(B) 90 bis 10 Gewichtsteile einer Formulierung von mindestens einem Elastomer, das ungesättigte Doppelbindungen aufweist und mit einem Vernetzungs- oder Vulkanisationsmittel reagieren kann, wobei die Formulierung ein Vernetzungs- oder Vulkanisationssystem für das Elastomer bzw. die Elastomere, mindestens einen Weichmacher und die in Elastomerformulierungen üblichen Additive enthält;
(C) bis zu 100 Gewichtsteile, bezogen auf (A) + (B), mindestens eines Pfropfcopolymers mit Polyamidblöcken, wobei das Copolymer aus einer Polyolefin-Hauptkette und durchschnittlich mindestens 1,3 Polyamid-Pfropfanteilen an der Hauptkette besteht und eine nanostrukturierte Organisation aufweist, wobei die Pfropfanteile eine zahlenmittlere Molmasse von weniger als 5000 g/mol aufweisen und über die Reste eines ungesättigten Monomers (X) mit einer Funktion, die mit einem Polyamid mit einer Amin-Endgruppe reagieren kann, an die Hauptkette gebunden sind und die Reste des ungesättigten Monomers (X) durch Pfropfung oder Copolymerisation über seine Doppelbindung an der Hauptkette fixiert sind,
wobei (A) und (B) in der Mischung bereits durch das Verfahren der dynamischen Vernetzung oder Vulkanisation zu einer vernetzten bzw. vulkanisierten thermoplastischen Zusammensetzung miteinander kombiniert worden sein können.

2. Mischung nach Anspruch 1, **dadurch gekennzeichnet, dass** der Anteil an Bestandteil (C) 10 bis 90 Gewichtsteile, bezogen auf (A) + (B), beträgt.

3. Mischung nach einem der Ansprüche 1 und 2, **dadurch gekennzeichnet, dass** das thermoplastische olefinische Polyolefin bzw. die thermoplastischen olefinischen Polyolefine aus Ethylen-Homopolymeren, Propylen-Homopolymeren, Copolymeren von Ethylen mit C₃-C₈-alpha-Olefinen, mit Estern von (Meth) acrylsäure und C₁-C₈-Alkoholen und mit Vinylacetat ausgewählt sind.

4. Mischung nach einem der Ansprüche 1 bis 3, **dadurch gekennzeichnet, dass** das ungesättigte Elastomer des Bestandteils (B) aus:
- Terpolymeren von Ethylen, Propylen und einem Dien (EPDM);
- Elastomeren auf Basis von Butadien, natürlich (NR) oder synthetisch, und Styrol-Butadien-Copolymeren (SBR);
- Copolymeren von Butadien mit Acrylnitril (NBR);
- teilweise hydrierten Copolymeren von Butadien mit Acrylnitril (HNBR);
- Elastomeren auf Basis von Isopren (IR);
- Acryl-Elastomeren wie Copolymeren von Acrylsäureestern mit einer reaktiven Säure- oder Epoxidfraktion wie Copolymeren von Methyl- oder Butylacrylat mit Acrylsäure oder Glycidylmethacrylat (ACR)
ausgewählt ist.

5. Mischung nach einem der Ansprüche 1 bis 4, **dadurch gekennzeichnet, dass** das Vernetzungs- oder Vulkanisationssystem aus Vulkanisationsmitteln auf Basis von Schwefel, Peroxid, Phenolharz, Azoverbindungen, Maleinimidoverbindungen, chinoiden Verbindungen und Urethanverbindungen für die Dienelastomere; aus Mitteln auf Basis von multifunktionellen Aminen, wie Hexamethylendiamincarbamat, oder von Diisocyanaten für die Acrylelastomere mit Säuregruppen; oder aus Mitteln auf Basis von Ammoniumsalzen, 2-Methylimidazol oder Molekülen multifunktioneller Säuren für die Acrylelastomere mit Epoxidgruppe ausgewählt ist.

6. Mischung nach einem der Ansprüche 1 bis 5, **dadurch gekennzeichnet, dass** das Vernetzungs- oder Vulkanisationssystem 1 bis 20 phr von Bestandteil (B) ausmacht.

7. Mischung nach einem der Ansprüche 1 bis 6, **dadurch gekennzeichnet, dass** der Weichmacher bzw. die Weichmacher 5 bis 200 phr von Bestandteil (B) ausmacht bzw. ausmachen und insbesondere aus Ölen, die aus aliphatischen, naphthenischen oder aromatischen Kohlenwasserstoffgemischen bestehen, für die Elastomere mit ungesättigten Doppelbindungen und aus polaren Ölen auf Basis von Phthalsäureestern für die Acrylelastomere ausgewählt ist bzw. sind.

8. Mischung nach einem der Ansprüche 1 bis 7, **dadurch gekennzeichnet, dass** die üblichen Additive aus pulverförmigen mineralischen Füllstoffen, wie Zinkoxiden, Titanoxiden, Rußen, Kaolinen und Siliciumdioxiden, Pigmenten, Haftvermittlern, Antidegradantien, Verarbeitungsadditiven wie Stearaten und Wachsen ausgewählt sind und insbesondere 10 bis 150 phr von Bestandteil (B) ausmachen.

9. Mischung nach einem der Ansprüche 1 bis 8, **dadurch gekennzeichnet, dass** es sich bei X um ein ungesättigtes Carbonsäureanhydrid handelt.

10. Mischung nach Anspruch 9, **dadurch gekennzeichnet, dass** die X enthaltende Polyolefin-Hauptkette aus Ethylen-Maleinsäureanhydrid- und Ethylen-Alkyl-(meth)acrylat-Maleinsäureanhydrid-Copolymeren ausgewählt ist.

11. Mischung nach einem der Ansprüche 1 bis 10, **dadurch gekennzeichnet, dass** durchschnittlich 1,3 bis 10 mol X, insbesondere 1,3 bis 7 mol X, die an die Polyolefin-Hauptkette von Bestandteil (A) gebunden sind, vorliegen.

12. Mischung nach einem der Ansprüche 1 bis 11, **dadurch gekennzeichnet, dass** das Copolymer mit Polyamidblöcken eine nanostrukturierte Organisation mit Polyamidlamellen mit einer Dicke zwischen 10 und 50 Nanometer oder mit einem durch thermomechanische Analyse bei einer Frequenz von 1 Hz auf einem dynamischen Rheometer vom Typ Rheometrics gemessenen Elastizitätsmodul von mehr als 0,5 MPa in der Mitte des Intervalls zwischen dem Schmelzpunkt der Polyolefin-Hauptkette und dem Schmelzpunkt des Polyamid-Pfropfanteils aufweist, wenn der Schmelzpunkt der Polyolefin-Hauptkette um mindestens 40 °C niedriger ist als derjenige des Polyamid-Pfropfanteils.

13. Vernetzte oder vulkanisierte thermoplastische Zusammensetzung, **dadurch gekennzeichnet, dass** sie aus der Mischung gemäß einem der Ansprüche 1 bis 12 gebildet ist, wobei das Elastomer von Bestandteil (B) während des Mischens mit den Bestandteilen (A) und (C) vernetzt oder vulkanisiert worden ist.

14. Verfahren zur Herstellung der Zusammensetzung gemäß Anspruch 13, **dadurch gekennzeichnet, dass** man die Formulierung von Bestandteil (B) mit den Bestandteilen (A) und (C) bei einer ausreichenden Temperatur und über einen ausreichenden Zeitraum zum Vernetzen oder Vulkanisieren des Elastomers von Bestandteil (B) knetet.

15. Fertigartikel, wobei mindestens einer der Bestandteile davon aus der Zusammensetzung gemäß Anspruch 13 oder durch das Verfahren gemäß Anspruch 14 oder aus der Mischung der vernetzten oder vulkanisierten thermoplastischen Zusammensetzung von (A) + (B) mit dem Bestandteil (C) durch Techniken der Extrusion oder Coextrusion, der Extrusionsbeschichtung, des Spritzgießens, des Formpressens, des Kalandrierens, des Abscheidens auf Kabel, des Abscheidens von Pulvern nach Mahlen einschließlich gemäß den Verfahren des elektrostatischen Spritzens, des Wirbelschichttauchens, des Laser-Prototyping, des Rotationsformens oder "Slush-Moulding", insbesondere zur Herstellung von "Häuten" für Armaturenbretter, Türhäute oder Konsolen, erhalten wird.

## Claims

1. Mixture comprising, per 100 parts by weight of (A) + (B):
(A) 10 to 90 parts by weight of at least one non-nanostructured olefinic thermoplastic polymer;
(B) 90 to 10 parts by weight of a formulation of at least one elastomer which has unsaturated double bonds and is capable of reacting with a crosslinking or vulcanizing agent, said formulation including a system for crosslinking or vulcanizing said elastomer or elastomers, at least one plasticizer, and the additives customary in elastomer formulations;
(C) up to 100 parts by weight, relative to (A) + (B), of at least one graft copolymer having polyamide blocks, said copolymer being composed of a polyolefin backbone and of on average at least 1.3 polyamide grafts on said backbone, and having a nanostructured organization, in which said grafts have a number-average molar mass of less than 5000 g/mol and are attached to the backbone by the residues of an unsaturated monomer (X) having a function which is capable of reacting with an amino-terminal polyamide; and the residues of said unsaturated monomer (X) being attached to the backbone by grafting or copolymerization from its double bond,
it being possible for (A) and (B) in the mixture to have already being combined together by the dynamic vulcanizing or crosslinking process, to give a vulcanized or crosslinked thermoplastic composition.

2. Mixture according to Claim 1, **characterized in that** the proportion of constituent (C) is from 10 to 90 parts by weight relative to (A) + (B).

3. Mixture according to either of Claims 1 and 2, **characterized in that** the thermoplastic olefinic polyolefin or polyolefins are selected from ethylene homopolymers, propylene homopolymers, copolymers of ethylene with C₃-C₈ alpha-olefins, with esters of (meth) acrylic acid and C₁-C₈ alcohols, and with vinyl acetate.

4. Mixture according to any of Claims 1 to 3, **characterized in that** the unsaturated elastomer of constituent (B) is selected from:
- terpolymers of ethylene, propylene, and a diene (EPDM) ;
- elastomers based on butadiene, natural (NR) or synthetic, and styrene-butadiene copolymers (SBR) ;
- copolymers of butadiene with acrylonitrile (NBR) ;
- partially hydrogenated copolymers of butadiene with acrylonitrile (HNBR);
- elastomers based on isoprene (IR);
- acrylic elastomers such as the copolymers of acrylic esters having a reactive acid or epoxy fraction, such as copolymers of methyl acrylate or butyl acrylate with acrylic acid or glycidyl methacrylate (ACR).

5. Mixture according to any of Claims 1 to 4, **characterized in that** the crosslinking or vulcanizing system is selected from vulcanizing agents based on sulfur, on peroxide, on phenolic resin, or on azo, maleimido, quinoid, and urethane compounds, for the diene elastomers; from agents based on polyfunctional amines, such as hexamethylenediamine carbamate, or on diisocyanates, for the acrylic elastomers having acid groups; or from agents based on ammonium salts, 2-methylimidazole or molecules of polyfunctional acids, for the acrylic elastomers with an epoxide group.

6. Mixture according to any of Claims 1 to 5, **characterized in that** the crosslinking or vulcanizing system represents 1 to 20 phr of constituent (B).

7. Mixture according to any of Claims 1 to 6, **characterized in that** the plasticizer or plasticizers represent 5 to 200 phr of constituent (B), and are selected especially from oils composed of mixtures of aliphatic, naphthenic or aromatic hydrocarbons, for the elastomers having unsaturated double bonds, and from polar oils based on esters of phthalic acid, for the acrylic elastomers.

8. Mixture according to any of Claims 1 to 7, **characterized in that** the customary additives are selected from pulverulent inorganic fillers, such as zinc oxides and titanium oxides, carbon blacks, kaolins, and silicas, pigments, coupling agents, antidegradants, processing additives such as stearates, and waxes, and represent especially 10 to 150 phr of constituent (B).

9. Mixture according to any of Claims 1 to 8, **characterized in that** X is an unsaturated carboxylic acid anhydride.

10. Mixture according to Claim 9, **characterized in that** the polyolefin backbone comprising X is selected from ethylene-maleic anhydride and ethylene-alkyl (meth)acrylate-maleic anhydride copolymers.

11. Mixture according to any of Claims 1 to 10, **characterized in that** there are on average 1.3 to 10 mol of X, more particularly 1.3 to 7 mol of X, attached to the polyolefin backbone of constituent (A) .

12. Mixture according to any of Claims 1 to 11, **characterized in that** the grafts are homopolymers composed of residues of caprolactam, 11-aminoundecanoic acid or dodecalactam, or are copolyamides composed of residues selected from at least two of the three aforementioned monomers.

13. Crosslinked or vulcanized thermoplastic composition **characterized in that** it is formed from the mixture as defined in any of Claims 1 to 12, wherein the elastomer of constituent (B) has been crosslinked or vulcanized during mixing with constituents (A) and (C).

14. Process for preparing the composition as defined in Claim 13, **characterized in that** the formulation of constituent (B) with constituent (A) and (C) is milled at a sufficient temperature and for a sufficient period of time to crosslink or vulcanize the elastomer of constituent (B).

15. Finished article at least one of whose constituents is obtained from the composition as defined in Claim 13, or obtained by the process as defined in Claim 14, or from the mixture of the crosslinked or vulcanized thermoplastic composition of (A) + (B) with the constituent (C), by techniques of extrusion or coextrusion, extrusion coating, injection molding, compression molding, calendering, deposition on cable, deposition of powders after grinding, including by the processes of electrostatic spraying, fluidized bed dipping, laser prototyping, rotor molding or slush molding, especially for producing "skins" for dashboards, door panels or consoles.
